# NEW EUROPEAN PATENT SPECIFICATION

(11) **EP 2 161 421 B2**
(45) Date of publication and mention of the opposition decision: **09.08.2017**
(45) Mention of the grant of the patent: 12.12.2012
(21) Application number: 08163622.7
(22) Date of filing: 03.09.2008
(51) Int. Cl.: F01N 3/20, F01N 3/36

(54) **Apparatus for Storing NOx Reductant on a Vehicle**
Vorrichtung zum Speichern von NOx-Reduktionsmittel bei einem Fahrzeug
Appareil de stockage de réducteur NOx sur un véhicule

(43) Date of publication of application: 10.03.2010
(73) Proprietor: Delphi International Operations Luxembourg S.à r.l., 4940 Bascharage (LU)
(72) Inventor: Seino, Michael J, Flushing, MI 48433 (US); Li, Bob X, Grand Blanc, MI 48439 (US)
(74) Representative: Delphi France SAS

(56) References cited:
- DE-A1-102005 025 724
- DE-A1-102006 046 900
- DE-A1-102006 061 735
- GB-A- 2 423 686

## Description

The invention relates to apparatus for storing NOₓ reductant on a vehicle.

Diesel engines are typically more efficient than gasoline engines, with regard to fuel economy and emit less greenhouse gasses. However, diesel engines typically produce emissions containing higher concentrations of nitrogen oxides (NOₓ) compared to gasoline engines fitted with three-way catalysts.

One method that has been employed to remove NOₓ from diesel exhaust utilizes selective catalytic reduction (SCR) of NOₓ with a liquid nitrogen containing reductant, such as aqueous urea. NOₓ and the liquid reductant are brought into contact with a selective catalyst and catalytically converted into environmentally safe nitrogen and water. When a liquid reductant is used, the liquid reductant is typically injected directly into the exhaust pipe in front of a catalyst to effect reduction of NOₓ on the surface of the catalyst or in the catalyst itself.

However, one major disadvantage of liquid reductants is that freezing of the reductant may occur. The freezing temperature varies relative to the composition and concentration of the dissolved reductant. For example, solutions having a urea content of about 32.5% in water (eutectic), typically freeze at about 12°F, (-11°C). As can be readily expected, liquid reductant freezing is particularly a problem for the use of diesel vehicles in cold-weather climates when a liquid reductant is employed to help meet emission standards for NOₓ.

Therefore, a thermal heating system is required to melt the solidified urea solution to enable an on-board-vehicle pump to draw the liquid urea solution from its container and to deliver it into the exhaust pipe for the SCR. DE 102 006 06 1735 discloses such a thermal heating system.

In accordance with the present invention, there is provided an apparatus for storing a liquid NOₓ reductant on a vehicle, the apparatus comprising a container for containing the liquid NOₓ reductant, a first heating device located in the container and adapted to heat the NOₓ reductant in use, and a tube having a first end adapt to be submerged in liquid NOₓ reductant in the container in use, and the tube being adapted to extract liquid NOₓ reductant from the container, the tube including a second heating device extending along at least a portion of the length of the tube that is located within the container, and a plate member mechanically coupled to the first heating device and the first end of the tube assembly.

Preferably, at least a section of the portion of the length of the tube along which the second heating device extends and any length of tube between the section and the first end are adapted to be submerged in NOₓ reductant in the container, in use.

Typically, the portion of the length of the tube along which the second heating device extends is at least substantially the length of the tube that is located within the container.

In one example of the invention, the second heating device comprises a helical resistive wire heating device encircling the tube. In another example of the invention, the second heating device comprises a ribbon heater, which may be, for example, made from carbon fibre materials. Alternatively, the second heater may be a flexible resistive heater, for example, made of carbon or silicon rubber materials.

In a further example of the invention, the second heater may comprise a thick film heater circuit, which may be printed on the outside surface of the tube.

In one example of the invention, the tube may be a flexible tube and in this case, the second heating device may be integrally formed within the material of the tube.

In another example of the invention, the tube may be a substantially rigid tube, for example, a metal tube, such as stainless steel and the second heating device is in contact with the external surface of the tube so that heat from the heating device is conducted through the side wall of the tube to the interior of the tube.

Typically, the portion of the tube along which the second heating device extends, may be enclosed in an outer tube, which, for example, may be a metal tube, such as a stainless steel tube. Typically, the outer tube is plugged at both ends and for example, could be filled with a filler material, such as a resin or elastomeric material that is preferably compatible with the NOₓ reductant.

Preferably, where an outer tube surrounds the second heating device and the portion of the tube along which the second heating device extends, a temperature sensor and/or a liquid level sensor may be housed within an annular gap between the tube and the outer tube to sense the temperature and the level of the NOₓ reductant within the container, in use.

Preferably, the liquid NOₓ reductant is a urea solution, typically having a urea content of between 25% and 40% and preferably, between 30% and 35% and most preferably, substantially 32.5%.

In one example of the invention, the tube extends through a sidewall of the container so that a second end of the tube is outside the container. For example, it is possible that the tube could extend to a dispensing device, such as an injector, for dispensing the NOₓ reductant into the exhaust flow. However, alternatively, the second end of the tube could terminate inside the container at a connector mounted on a sidewall of the container. The term "sidewall" in this context means any wall of the container, including the top, bottom or sides of the container.

Preferably, the container includes a removable closure and the first and second heating devices are electrically coupled and the tube is fluidly coupled to further apparatus outside the container through the removable closure when the container is closed by the closure.

In accordance with the invention, the first heating device and the first end of the tube are mechanically coupled to a plate member that is preferably located adjacent the bottom of the container when the container is closed by the closure.

The first heating device may be a resistive heating element, typically located at or adjacent to the bottom of the container. For example, the resistive heating element may be in the form of a helical coil.

Alternatively, the first heating device may comprise a positive temperature coefficient (PTC) heater element. Typically, where the first heating device comprises a PTC heater element, the PTC heater element is located at or adjacent to the bottom of the container. Typically, a number of PTC heater elements form the first heating device. For example, the first heating device may include three PTC heater elements. However, any number of PTC heater elements may be used. The number of PTC elements that are used may depend, for example, on the shape and configuration of the container, the type of NOx reductant used and the maximum volume of NOx reductant that can be held in the container. Preferably, the PTC heater elements are encased in a NOₓ reductant compatible material. For example, the PTC heater elements could be encapsulated in a suitable material that is resistant to the NOₓ reductant. The encapsulation could be performed by a moulding technique, such as injection moulding.

Where the tube is a flexible tube, the tube may comprise a multilayer tube and for example, may include at least a sealing layer and a thermoplastic elastomeric layer and the second heating device is integrally formed in at least one of the layers. The tube may also preferably include an insulating layer.

Typically, the second heating device is located in or close to the innermost layers of the tube so that it is relatively close to the internal surface of the tube. Alternatively or in addition, the second heating device may be located in or close to the outermost layers of the tube. Preferably, the second heating device extends between the innermost and the outermost layers of the tube. This has the advantage that the second heating device can be used to both heat the interior of the tube and the exterior of the tube. Heating the exterior of the tube as well as the interior of the tube has the advantage of helping to create a liquid flow path along the outside surface of the tube when the NOₓ reductant is frozen in the container, in use.

Examples of apparatus for storing an NOₓ reductant in accordance with the invention will now be described with reference to the accompanying drawings, in which:
Figure 1A is a perspective view of a first example of apparatus for storing a urea solution on a vehicle and including three PTC heater elements and a heated flexible pickup tube;
Figure 1B is a perspective view from below of a cover for the apparatus shown in Fig. 1A
Figure 2 is a perspective view of a second example of apparatus for storing a urea solution on a vehicle and including a resistive heater element and a heated flexible pickup tube;
Figure 3 is an enlarged view of a bottom of the apparatus shown in Figure 2;
Figure 4 is a cross-sectional view of the heated flexible pickup tube shown in Figures 1A, 1B, 2 and 3;
Figures 5A and 5B are cross sectional views of a first example of a heated rigid pickup tube;
Figures 6A and 6B are cross sectional views of a second example of a heated rigid pickup tube; and
Figures 7A and 7B are cross sectional views of a third example of a heated rigid pickup tube.

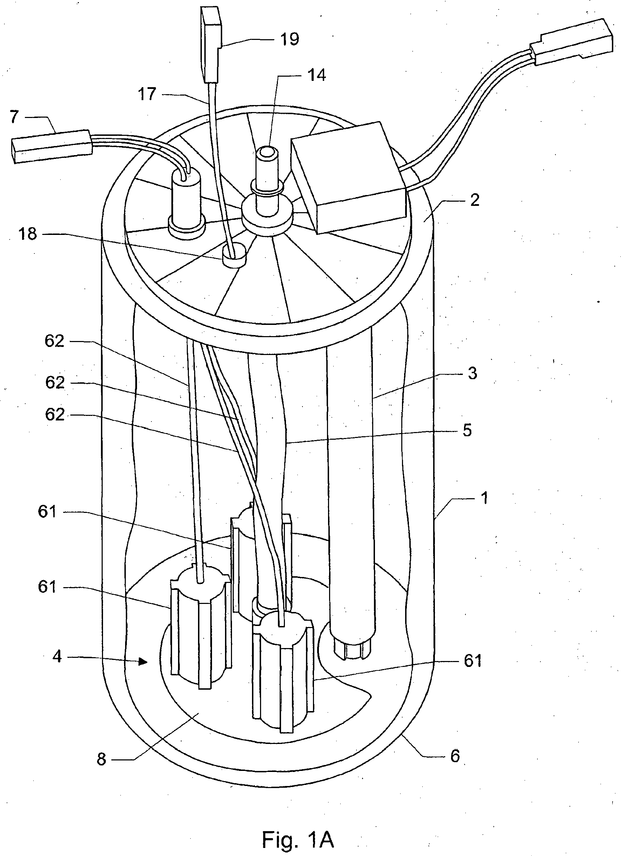

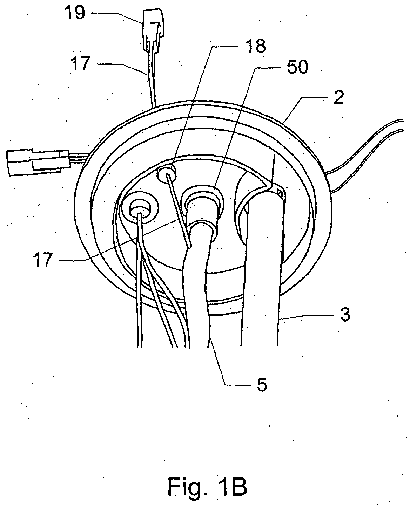

Figures 1A and 1B show a urea solution storage system for light duty vehicles that is mounted in an appropriate location on the vehicle. The storage system consists of a container 1, a cover 2, a combined liquid level and temperature sensor 3, a pickup tube 5 with a filter (not shown) at its lower end and a heater 4. The heater 4 consists of three positive temperature coefficient (PTC) heating elements 61 that are located near the bottom 6 of the container 1. The PTC heating elements 61 are encased in a urea resistant protective shell and are mechanically mounted on a base plate 8 and electrically coupled by wires 62 to a connector 7 on the other side of the cover 2. Generally, the base plate 8 also supports lower end of the pickup tube 5. The base plate 8 is mounted inside the container 1 near the base 6 of the container 1. This helps to prevent movement of the heater elements 61 and the pickup tube 5 within the container 1 during movement of the vehicle and also spaces the heater and the lower end of the pickup tube 5 from the bottom 6 so that liquid urea solution can easily enter the lower end of the pickup tube 5 and to permit a pool of liquid urea solution to form under the pickup tube 5 and the heater 4 during melting of frozen urea solution within the container 1.

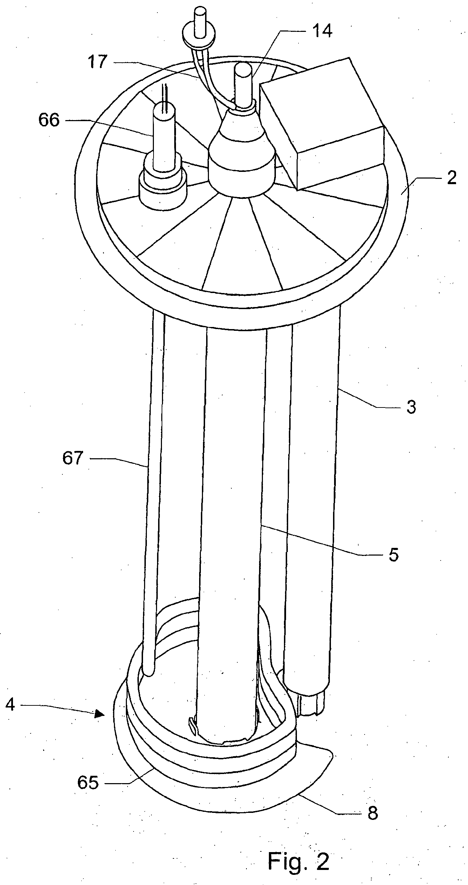

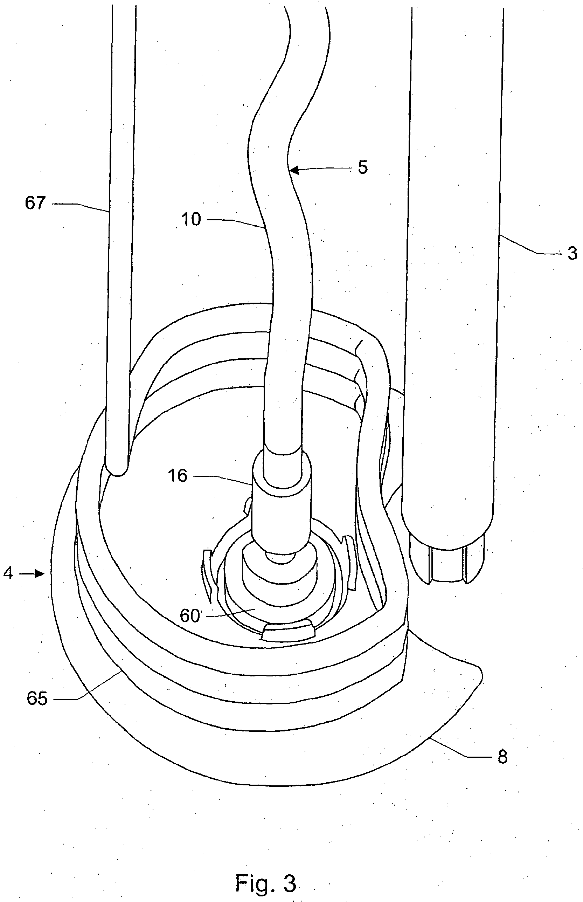

Figures 2 and 3 show a urea solution storage system similar to that shown in Figures 1A and 1B, except that the PTC heating elements 61 of the heater 4 are replaced with a coiled resistive heating element 65 mechanically mounted on the base plate 8 and which is electrically coupled to a connector 66 on the cover 2 by means of a heater shaft 67. In this example, the resistive heating element is in the form of a resistive heating wire mounted inside a coiled metal tube to form the coiled resistive heating element 65. However, any suitable type of resistive heating element could be used. Also, in the example shown in Figures 2 and 3, the heater shaft 67 is not heated. This helps to avoid the problem of the urea solution being overheated by the heater shaft.

Figure 3 shows a filter connector 60 that is connected to a connector 16 on the lower end of the pick-up tube 5. The filter connector 60 attaches to a filter (not shown) located below the base plate 8.

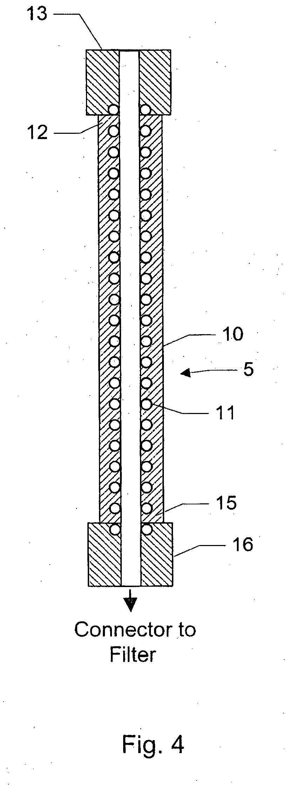

Figure 4 is a cross sectional view of the pickup tube 5 shown in Figures 1 and 2. The pickup tube 5 comprises a flexible hose 10. Typically, the flexible hose is a multilayered hose that includes at least a thermoplastic elastomeric layer, a heating element, a sealing layer and insulating layer. Typically, the sealing layer is the inner most layer and the next inner layer is the thermoplastic elastomeric layer and the heating element is preferably incorporated into the thermoplastic elastomeric layer. The outer layer is typically the insulating layer. As shown in Figure 4, the heating element 11 is a resistive wire heater that is helically formed along the length of the flexible hose 10 and is an integral part of the hose 10. However, other heating devices could be used, such as a ribbon heater made of carbon fibre materials or an etched resistive pattern ribbon heater. At end 12 of the pickup tube 5 is an end connector 13 that connects the pickup tube 5 to a tubing connector 14 in the cover 2. At the opposite end 15 of the pickup tube 5 is another connector 16 which permits the pickup tube 5 to be coupled to the filter 60. As shown in Figure 1B, the electrical connections for the heating element 11 are provided by wires 17 that extend from the sidewall of the pickup tube 5 through a sealed opening 18 in the cover to terminate in a connector 19. However, an alternative option would be to have the wires 17 extend from the sidewall of the pickup tube 5 on the other side of the cover 2. This would have the advantage of not requiring the opening 18 in the cover 2.

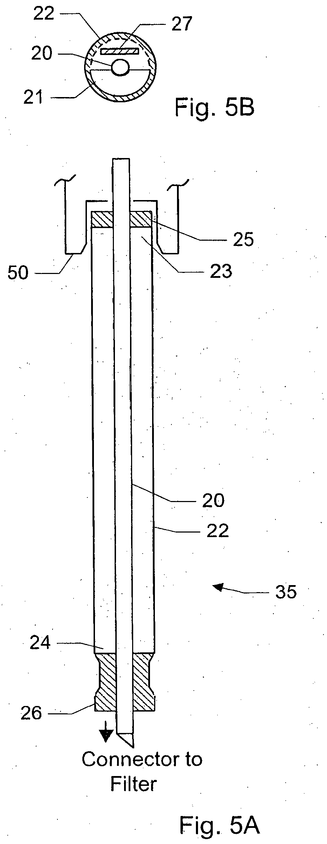

Figures 5A to 7B show three further examples of the pickup tube 5 in which the pickup tube 5 comprises a rigid stainless steel tube 20 through which the urea solution is extended from the container 1.

Figures 5A and 5B show a first example of a rigid pickup tube 35 using the rigid stainless steel tube 20. In this example a flexible heater 21 is in intimate contact with the outside surface of the stainless steel tube 20 and partially encircles the stainless steel tube 20. An outer protective stainless steel tube 22 encloses the flexible heater 21 and the length of the stainless steel tube 20 along which the flexible heater 21 extends. At both the upper end 23 and the lower end 24 of the outer stainless steel tube 22 is an elastomeric end plug 25, 26 respectively. The rubber end plugs 25, 26 are compatible with the NOₓ reductant and seal the ends of the annular gap between the outer stainless steel tube 22 and the inner stainless steel tube 20 to prevent the ingress of urea solution into the annular gap between the tubes 20, 22 and so isolate the flexible heater 21 from the urea solution.

The upper plug 25 also provides a connection to permit the plug 25 to be inserted into a boss 50 in the cover 2 and the lower plug 26 provides for connection of the pickup tube 35 to a filter (not shown).

As shown in Figure 5B, the outer stainless steel tubing 22 can also house a printed circuit board (PCB 27) in the annular gap. The PCB 27 includes a temperature sensor and a liquid level sensor to enable monitoring of the temperature of the urea solution in the container 1 and the level of the urea solution in the container 1. The wiring for the sensors and the heater 21 are also contained within the annular gap between the inner and outer tubes 20, 22 but are not shown in Figures 5A and 5B.

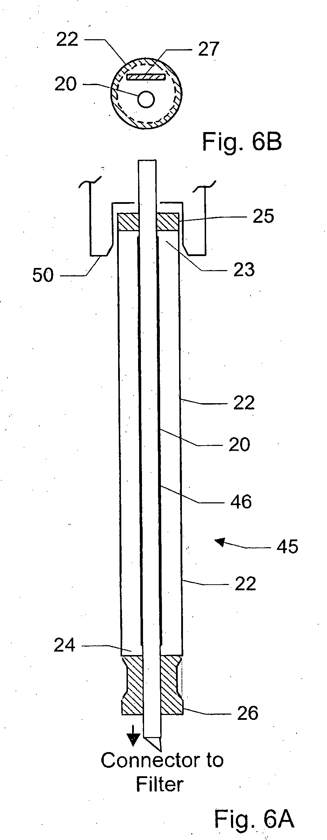

Figure 6A and 6B show a second example of a rigid pickup tube 45 incorporating an inner stainless steel tube 20. In this example, a thick film heater 46 is printed onto the outside surface of the stainless steel tube 20. As in the first example described above and shown in Figures 5A and 5B, the inner stainless steel tube 20 and printed heater 46 are enclosed in an outer protective stainless steel tube 22 that has plugs 25, 26 at its upper 23 and lower ends 23, 24 to seal the annular gap between the inner tube 20 and the outer tube 22 to prevent the ingress of urea solution into the annular gap between the tubes 20, 22.

As in the first example of the pickup tube 35 described above and shown in Figures 5A and 5B, the annular gap between the inner tube 20 and the outer tube 22 in the second example shown in Figures 6A and 6B can also accommodate a PCB 27. The PCB 27 can include a temperature sensor and a liquid level sensor to permit the temperature of the urea solution in the container 1 to be monitored and the level of the urea solution in the container 1 to be monitored.

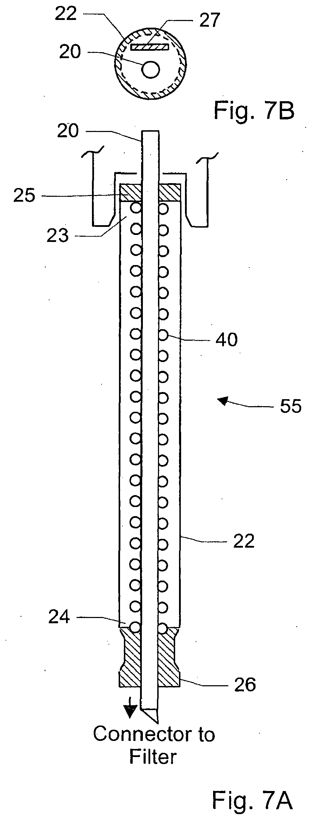

Figures 7A and 7B show a third example of a rigid pickup tube 55 incorporating an inner stainless steel tube 20. In this example, the heating element is provided by an electrically insulated resistive wire wound heater 40 that is wound helically around the inner tube 20 along the length of the inner tube 20, as shown in Figure 7A. As with the first and second examples shown in Figures 5A to 6B, an outer protective stainless steel tube 22 is located around the resistive wire heater element 40 and the inner tube 20 and plugs 25, 26 are provided at the upper and lower ends 23, 24 of the outer tube 22, respectively. As in the first and second examples of the pickup tubes 35, 45, the pickup tube 55 is mounted on a boss 50 of the cover 2 by means of the upper plug 25 and the lower plug 26 provides a connection to a filter (not shown). The plugs 25, 26 also seal the annular gap between the outer tube 22 and the inner tube 20 to prevent the ingress of urea solution into the annular gap between the tubes 20, 22.

Furthermore, a PCB 27 with a temperature sensor and liquid level sensor may also be mounted in the outer protective tube 22, in a similar manner to that described above for the pickup tubes 35, 45.

In use, the apparatus is mounted on a diesel fuel powered vehicle and contains a urea solution for injection into the exhaust of the vehicle upstream of a catalyst so that the urea solution mixes with the exhaust gases and on contact with the catalyst reduces any NOₓ in the gases to nitrogen and water.

If the vehicle is in a cold climate and the urea solution has frozen in the container 1, the temperature sensor 3 detects that the urea solution may be frozen and switches on the heater 4 to start to melt the urea solution in the container 1.

A certain amount of urea solution around the pickup tube 5 also needs to melted to so that it creates a fluid path from the top of the container 1 to below the base plate 8 where the urea pickup occurs through the filter 60 attached to the lower end of the pickup tube 5. This path creates a fluid communication channel to prevent vacuum locking beneath the frozen urea solution as melted urea solution is extracted from the container 1. Therefore, the heating device 11, 21, 46, 40 in the pickup tube 5 is also used to melt frozen urea solution surrounding the tube 5 to create this communication path around the outside of the pickup tube 5, as well as heating the interior of the tube 5 to reduce the risk of melted urea solution within the pickup tube 5 refreezing in the pickup tube 5.

An advantage of the invention is that it enables independent heating control of the pickup tubes 5, 35, 45, 55 and the urea liquid within the container 1 which is heated by the separately controlled heater 4. This enables optimum heating of both the pickup tube 5 and the mass of urea solution within the container 1.

In addition, the use of a heated pickup tube 5, 35, 45, 55 mitigates the risk of the urea solution freezing at the cover interconnection 14.

## Claims

1. Apparatus for storing a liquid NOₓ reductant on a vehicle, the apparatus comprising:
a container (1) for containing the liquid NOₓ reductant;
a first heating device (4) located in the container and adapted to heat the NOₓ reductant in use;
a tube assembly (5; 35; 45; 55) having a first end adapted to be submerged in liquid NOₓ reductant in the container in use, and being adapted to extract liquid NOₓ reductant from the container, the tube assembly comprising a tube (10; 20) and a second heating device (11; 21; 46; 40) extending along at least a portion of the length of the tube that is located within the container;
a plate member (8) is mechanically coupled to the first heating device (4) and the first end of the tube assembly (5; 35; 45; 55), the plate member (8) being adapted to be located adjacent the bottom of the container (6) when the container is closed by a removable closure (2);
wherein the container (1) includes the removable closure (2) and the first (4) and second (11; 21; 46; 40) heating devices are electrically coupled to electrical apparatus outside the container through the removable closure and the tube assembly (5; 35; 45; 55) is fluidly coupled to further apparatus outside the container through the removable closure when the container is closed by the closure,
**characterized in that** the first heating device (4) is a separately controlled heater.

2. Apparatus according to any one of the preceding claims, wherein the second heating device (11; 21; 46; 40) comprises a helical resistive wire heating device (11; 40) encircling the tube.

3. Apparatus according to any one of Claims 1, wherein the second heating device (11; 21; 46; 40) comprises a ribbon heater.

4. Apparatus according to any one of Claims 1, wherein the second heating device (11; 21; 46; 40) comprises a flexible resistive heater (21).

5. Apparatus according to any one of Claims 1, wherein the second heating device (11; 21; 46; 40) comprises a film heater circuit (46).

6. Apparatus according to Claim 5, wherein the film heater circuit (46) is printed on the outside surface of the tube (20).

7. Apparatus according to any one of the preceding claims, wherein the tube comprises a flexible tube (10).

8. Apparatus according to Claim 7, wherein the second heating device (11; 21; 46; 40) is embedded within the walls of the flexible tube (10).

9. Apparatus according to any one of Claims 1 to 6, wherein the tube comprises a first substantially rigid tube (20).

10. Apparatus according to Claim 9, wherein the first substantially rigid tube (20) comprises a metal tube and the second heating device (11; 21; 46; 40) is in contact with the external surface of the first substantially rigid tube, so that heat from the second heating device is conducted through the sidewall of the first substantially rigid tube.

11. Apparatus according to any one of the preceding claims, wherein the tube assembly (5; 35; 45; 55) comprises an outer sheath (10; 22), and wherein the portion of the tube along which the second heating device (11; 21; 46; 40) extends is enclosed in the outer sheath.

12. Apparatus according to Claim 11, wherein the tube (10; 20) and the outer sheath (10; 22) define a space between the outer surface of the tube and the inner surface of the outer sheath, and the space is plugged (13, 16; 25, 26) at both ends to isolate the second heating device from NOₓ reductant in the container (1), in use.

13. Apparatus according to claim 11 or 12, wherein a temperature sensor and/or a liquid level sensor (27) is housed within the space between the tube (10; 20) and the outer sheath (10; 22).

14. Apparatus according to any of the preceding claims, wherein, the second heating device (11; 21; 46; 40) is adapted to heat both the internal wall of the tube assembly (5; 35; 45; 55) and the external wall of the tube assembly (5; 35; 45; 55).

## Patentansprüche

1. Vorrichtung zum Speichern eines flüssigen NOₓ-Reduktionsmittels in einem Fahrzeug, wobei die Vorrichtung Folgendes aufweist:
einen Behälter (1) zum Enthalten des flüssigen NOₓ-Reduktionsmittels,
ein erstes Heizelement (4), das sich in dem Behälter befindet und zum Erhitzen des flüssigen NOₓ-Reduktionsmittels im Gebrauch ausgeführt ist,
eine Röhrenanordnung (5; 35; 45; 55) mit einem ersten Ende, das ausgeführt ist, um im Gebrauch in dem flüssigen NOₓ-Reduktionsmittel in dem Behälter untergetaucht zu sein, und das ausgeführt ist, um flüssiges NOₓ-Reduktionsmittel aus dem Behälter abzuziehen, wobei die Röhrenanordnung eine Röhre (10; 20) und ein zweites Heizelement (11; 21; 46; 40) umfasst, die an wenigstens einem Teil der Länge der Röhre, der sich in dem Behälter befindet, entlang verläuft,
ein Plattenelement (8) mechanisch mit dem ersten Heizelement (4) und dem ersten Ende der Röhrenanordnung (5; 35; 45; 55) gekoppelt ist, das so ausgeführt ist, dass es am Boden des Behälters (6) angrenzend liegt, wenn der Behälter mit dem Verschluss verschlossen ist, wobei der Behälter (1) einen abnehmbaren Verschluss (2) hat und das erste (4) und das zweite (11; 21; 46; 40) Heizelement durch den abnehmbaren Verschluss elektrisch mit einer elektrischen Vorrichtung außerhalb des Behälters gekoppelt sind und die Röhrenanordnung (5; 35; 45; 55) durch den abnehmbaren Verschluss fluidisch mit einer weiteren Vorrichtung außerhalb des Behälters gekoppelt ist, wenn der Behälter mit dem Verschluss verschlossen ist,
**dadurch gekennzeichnet, dass** das erste Heizelement (4) eine separat gesteuerte Heizung ist.

2. Vorrichtung nach Anspruch 1, wobei das zweite Heizelement (11; 21; 46; 40) ein die Röhre umgebendes spiralförmiges Widerstandsdraht-Heizelement (11; 40) umfasst.

3. Vorrichtung nach Anspruche 1, wobei das zweite Heizelement (11; 21; 46; 40) eine Bandheizung umfasst.

4. Vorrichtung nach Anspruch 1, wobei das zweite Heizelement (11; 21; 46; 40) eine flexible Widerstandsheizung (21) umfasst.

5. Vorrichtung nach Anspruch 1, wobei das zweite Heizelement (11; 21; 46; 40) eine Folienheizungsschaltung (46) umfasst.

6. Vorrichtung nach Anspruch 5, wobei die Folienheizungsschaltung (46) auf die äußere Oberfläche der Röhre (20) gedruckt ist.

7. Vorrichtung nach einem der vorhergehenden Ansprüche, wobei die Röhre eine biegsame Röhre (10) umfasst.

8. Vorrichtung nach Anspruch 7, wobei das zweite Heizelement (11; 21; 46; 40) in die Wände der biegsamen Röhre (10) eingebettet ist.

9. Vorrichtung nach einem der Ansprüche 1 bis 6, wobei die Röhre eine erste, im Wesentlichen starre Röhre (20) umfasst.

10. Vorrichtung nach Anspruch 9, wobei die erste, im Wesentlichen starre Röhre (20) eine dünne Metallröhre umfasst und das zweite Heizelement (11; 21; 46; 40) mit der Außenfläche der ersten, im Wesentlichen starren Röhre in Kontakt ist, so dass Wärme von dem zweiten Heizelement durch die Seitenwand der ersten, im Wesentlichen starren Röhre geleitet wird.

11. Vorrichtung nach einem der vorhergehenden Ansprüche, wobei die Röhrenanordnung (5; 35; 45; 55) eine Außenhülle (10; 22) aufweist und wobei der Teil der Röhre, an dem entlang das zweite Heizelement (11; 21; 46; 40) verläuft, in der Außenhülle eingeschlossen ist.

12. Vorrichtung nach Anspruch 11, wobei die Röhre (10; 20) und die Außenhülle (10; 22) einen Zwischenraum zwischen der Außenfläche der Röhre und der Innenfläche der Außenhülle definieren und der Zwischenraum an beiden Enden verstopft ist (13, 16; 25, 26), um das zweite Heizelement im Gebrauch von dem NOₓ-Reduktionsmittel im Behälter (1) getrennt zu halten.

13. Vorrichtung nach Anspruch 11 oder 12, wobei in dem Zwischenraum zwischen der Röhre (10; 20) und der Außenhülle (10; 22) ein Temperaturfühler und/oder ein Flüssigkeitsstandsensor (27) eingehäust ist.

14. Vorrichtung nach einem der vorhergehenden Ansprüche, wobei das zweite Heizelement (11; 12; 46; 40) zum Erhitzen sowohl der Innenwand der Röhrenanordnung (5; 35; 45; 55) als auch der Außenwand der Röhrenanordnung (5; 35; 45; 55) ausgeführt ist.

## Revendications

1. Appareil pour stocker un réducteur de NOx liquide sur un véhicule, l'appareil comprenant :
un conteneur (1) pour contenir le réducteur de NOx liquide ;
un premier dispositif chauffant (4) situé dans le conteneur et adapté à chauffer le réducteur de NOx en utilisation ;
un ensemble à tube (5,35 ; 45,55) ayant une première extrémité adaptée à être submergée dans le réducteur de NOx liquide dans le conteneur en utilisation, et étant adapté à extraire du réducteur de NOx liquide depuis le conteneur, l'ensemble à tube comprenant un tube (10 ; 20) et un second dispositif chauffant (11 ; 21 ; 46 ; 40) s'étendant le long d'au moins une portion de la longueur du tube qui est située à l'intérieur du conteneur ;
un élément en plaque (8) est couplé mécaniquement au premier dispositif chauffant (4) et à la première extrémité de l'ensemble à tube (5 ; 35 ; 45 ; 55) l'élément de plaque (8) étant adapté à être placé adjacent au fond du conteneur (1) quand le conteneur est fermé par une fermeture amovible (2) ;
et dans lequel le conteneur (1) inclut la fermeture amovible (2), et le premier (4) et le second (11 ; 21 ; 46 ; 40) dispositif chauffant sont couplés électriquement à un appareil électrique à l'extérieur du conteneur à travers la fermeture amovible, et l'ensemble à tube (5 ; 35 ; 45 ; 55) est couplé de manière fluidique à un autre appareil à l'extérieur du conteneur à travers la fermeture amovible quand le conteneur est fermé par la fermeture ;
**caractérisé en ce que** le premier dispositif chauffant (4) est commandé séparément.

2. Appareil selon la revendication précédente, dans lequel le second dispositif chauffant (11 ; 21 ; 46 ; 40) comprend un dispositif chauffant à fil résistif hélicoïdal (11 ; 40) qui encercle le tube.

3. Appareil selon la revendication 1, dans lequel le second dispositif chauffant (11 ; 21 ; 46 ; 40) comprend un élément chauffant en ruban.

4. Appareil selon la revendication 1, dans lequel le second dispositif chauffant (11 ; 21 ; 46 ; 40) comprend un élément chauffant résistif flexible (21).

5. Appareil selon la revendication 1, dans lequel le second dispositif chauffant (11 ; 21 ; 46 ; 40) comprend un circuit chauffant en film (46).

6. Appareil selon la revendication 5, dans lequel le circuit chauffant en film (46) est imprimé sur la surface extérieure du tube (20).

7. Appareil selon l'une quelconque des revendications précédentes, dans lequel le tube comprend un tube flexible (10).

8. Appareil selon la revendication 7, dans lequel le second dispositif chauffant (11 ; 21 ; 46 ; 40) est noyé dans les parois du tube flexible (10).

9. Appareil selon l'une quelconque des revendications 1 à 6, dans lequel le tube comprend un premier tube sensiblement rigide (20).

10. Appareil selon la revendication 11, dans lequel le premier tube sensiblement rigide (20) comprend un tube en métal et le second dispositif chauffant (11 ; 21 ; 46 ; 40) est en contact avec la surface externe du premier tube sensiblement rigide, de sorte que la chaleur provenant du second dispositif chauffant est conduite à travers la paroi latérale du premier tube sensiblement rigide.

11. Appareil selon l'une quelconque des revendications précédentes, dans lequel l'ensemble à tube (5 ; 35 ; 45 ; 55) comprend une gaine extérieure (10 ; 22), et dans lequel la portion du tube le long de laquelle s'étend le second dispositif chauffant (11 ; 21 ; 46 ; 40) est enfermée dans la gaine extérieure.

12. Appareil selon la revendication 11, dans lequel le tube (10 ; 20) et la gaine extérieure (10 ; 22) définissent un espace entre la surface extérieure du tube et la surface intérieure de la gaine extérieure, et l'espace est bouchonné (13, 16 ; 25, 26) aux deux extrémités pour isoler le second dispositif chauffant vis-à-vis du réducteur de NOx dans le conteneur (1) en utilisation.

13. Appareil selon la revendication 11 ou 12, dans lequel un capteur de température et/ou un capteur de niveau de liquide (27) est logé dans l'espace entre le tube (10 ; 20) et la gaine extérieure (10 ; 22).

14. Appareil selon l'une quelconque des revendications précédentes, dans lequel le second dispositif chauffant (11 ; 21 ; 46 ; 40) est adapté à chauffer à la fois la paroi interne de l'ensemble à tube (5 ; 35 ; 45 ; 55) et la paroi extérieure de l'ensemble à tube (5 ; 35 ; 45 ; 55).
